# EUROPEAN PATENT SPECIFICATION

(11) **EP 4 280 348 B1**
(45) Date of publication and mention of the grant of the patent: **26.03.2025**
(21) Application number: 22739513.4
(22) Date of filing: 14.01.2022
(51) Int. Cl.: H01M 10/613, H01M 10/625, H01M 10/6555, H01M 10/658, H01M 50/20, H01M 10/647, H01M 10/653, H01M 50/224, H01M 50/24, H01M 50/293

(54) **HEAT TRANSFER SUPPRESSION SHEET FOR BATTERY PACK, AND BATTERY PACK**
WÄRMEÜBERTRAGUNGSUNTERDRÜCKUNGSFOLIE FÜR BATTERIEPACK UND BATTERIEPACK
FEUILLE DE SUPPRESSION DE TRANSFERT DE CHALEUR POUR BLOC-BATTERIE, ET BLOC-BATTERIE

(30) Priority: 18.01.2021 JP 2021006044
(43) Date of publication of application: 22.11.2023
(73) Proprietor: IBIDEN Co., Ltd., Gifu 503-8604 (JP)
(72) Inventor: ANDO, Hisashi, Ibi-gun, Gifu 501-0695 (JP); TAKAHASHI, Naoki, Ibi-gun, Gifu 501-0695 (JP)
(74) Representative: Hoffmann Eitle
(86) International application number: PCT/JP2022/001241
(87) International publication number: WO 2022/154108

(56) References cited:
- WO-A1-2020/111042
- JP-A- 2019 083 150
- JP-A- 2019 204 636
- JP-A- 2019 204 636
- JP-A- 2020 072 005

## Description

### TECHNICAL FIELD

The present invention relates to a heat transfer suppression sheet for a battery pack, which is suitably used for a battery pack serving as a power source for an electric motor that drives an electric vehicle or a hybrid vehicle, for example, and a battery pack using the heat transfer suppression sheet for a battery pack.

### BACKGROUND ART

In recent years, from the viewpoint of environmental protection, electric vehicles or hybrid vehicles driven by electric motors have been actively developed. The electric vehicle or the hybrid vehicle is equipped with a battery pack in which battery cells are connected in series or in parallel to serve as a power source for an electric drive motor.

For the battery cell, a lithium-ion secondary battery capable of high capacity and high output is mainly used as compared with a lead-acid battery, a nickel-metal hydride battery, and the like, but when thermal runaway occurs in one battery cell due to an internal short circuit, an overcharge, or the like of the battery (that is, in the case of "abnormality"), the propagation of heat to other adjacent battery cells may cause thermal runaway of the other adjacent battery cells.

For example, JP 2015-211013 A discloses a power storage device that can achieve effective heat insulation between power storage elements such as lithium-ion secondary batteries. In the power storage device described in JP 2015-211013 A, a first plate member and a second plate member are disposed between a first power storage element and a second power storage element adjacent to each other. Between the first plate member and the second plate member, a low thermal conductive layer, which is a layer of a substance having a lower thermal conductivity than that of the first plate member and the second plate member, is formed.

In the power storage device according to JP 2015-211013 A configured as described above, radiant heat from the first power storage element to the second power storage element or radiant heat from the second power storage element to the first power storage element is blocked by the first plate member and the second plate member. Heat transfer from one plate member to another plate member is also suppressed by the low thermal conductive layer.

However, in the above power storage device, since only a heat-insulating layer is provided between the first power storage element and the second power storage element, it is impossible to effectively cool the battery cell that generates heat during a charge and discharge cycle.

Therefore, JP 2019-175806 A proposes a heat-absorbing sheet for a battery pack that can cool battery cells during normal use while suppressing the propagation of heat between the battery cells when an abnormality occurs. The heat-absorbing sheet described in JP 2019-175806 A contains two or more substances having different dehydration temperatures. At least one of the two or more substances can be dehydrated during normal use of the battery cell, and at least one other substance can be dehydrated when the battery cell is abnormal.

JP 2020-72005 A relates to a heat transfer suppressing sheet in which a flat sheet including a heat absorbing material and/or a heat insulating material is formed on both surfaces of a corrugated sheet including a heat absorbing material and/or a heat insulating material.

JP 2019-204636 A describes a heat transfer suppression sheet which has a heat transfer suppression layer containing inorganic particles and/or inorganic fibers, wherein the heat transfer suppression layer has grooves communicating with the end faces in the in-plane direction in the heat transfer suppression layer, and the surface of the grooves has an irregular shape.

JP 2019-83150 A relates to a heat insulating sheet that includes a heat insulating layer comprising at least inorganic fibers or inorganic powder, and an endothermic layer formed on both surfaces of the heat insulating layer and comprising at least inorganic hydrate.

WO 2020/111042 A1 describes an electric power storage module which includes a plurality of storage devices arranged along a first direction and a separator that is disposed between two adjacent storage devices and insulates a space between the two storage devices. Each storage device includes an outer can having an opening, a sealing plate that blocks the opening, and a joint section where the outer can and the sealing plate are joined. The separator has an abutting region that contacts a surface of the outer cans facing in the first direction, and a separated region that overlaps the joint sections when viewed from the first direction and that is recessed in a direction away from the outer cans than the abutting region.

### SUMMARY OF INVENTION

### TECHNICAL PROBLEM

When battery cells assembled into a battery pack are subjected to a charge and discharge cycle (that is, in the case of "during normal use"), in order to sufficiently exhibit the charge and discharge performance of the battery cells, it is necessary to maintain the surface temperature of the battery cells at a predetermined value or lower (for example, 150°C or less).

When an abnormal situation occurs in which the temperature of the battery cells is, for example, 200°C or more, it is necessary to effectively cool the battery cells.

As described above, a heat transfer suppression means capable of maintaining the surface temperature of battery cells during normal use and capable of effectively cooling the battery cells in the case of abnormality of high temperature has been required to be further improved in recent years.

The present invention has been made in view of the above problems, and an object of the present invention is to provide a battery pack and a heat transfer suppression sheet for a battery pack that is used in a battery pack in which battery cells are connected in series or in parallel, and that can cool the individual battery cells during normal use while suppressing the propagation of heat between the battery cells when an abnormality occurs.

### SOLUTION TO PROBLEM

The above object of the present invention is achieved by a heat transfer suppression sheet for a battery pack according to independent claim 1.

The above object of the present invention is also achieved by a battery pack as defined in claim 7.

### ADVANTAGEOUS EFFECTS OF INVENTION

The heat transfer suppression sheet for a battery pack of the present invention is a heat transfer suppression sheet used in a battery pack in which battery cells are connected in series or in parallel, and a sealed gap is formed between the heat-insulating material and the covering material. Therefore, during normal use of the battery pack, moisture evaporated from the heat-insulating material can stay in the gap, and at this time, the battery cells can be effectively cooled by utilizing the heat of vaporization.

When the battery pack is abnormal, since a communication opening that allows the gap to communicate with the outside of the covering material is formed, the heated steam is released to the outside through the communication opening. Therefore, it is possible to suppress the propagation of heat between the battery cells.

In the battery pack of the present invention, since the heat transfer suppression sheet is interposed between the battery cells, the individual battery cells can be cooled during normal use, the propagation of heat between the battery cells can be suppressed when an abnormality occurs, and the chain of thermal runaway can be prevented.

### BRIEF DESCRIPTION OF DRAWINGS

[Fig. 1] Fig. 1 is a cross-sectional view schematically showing a heat transfer suppression sheet for a battery pack according to a first embodiment of the present invention.
[Fig. 2] Fig. 2 is a plan view schematically showing a heat-insulating material used in the heat transfer suppression sheet for a battery pack according to the first embodiment of the present invention.
[Fig. 3] Fig. 3 is a cross-sectional view schematically showing a battery pack to which the heat transfer suppression sheet for a battery pack according to the first embodiment of the present invention is applied.
[Fig. 4] Fig. 4 is a cross-sectional view schematically showing the heat transfer suppression sheet for a battery pack according to the first embodiment of the present invention when an abnormality occurs.
[Fig. 5] Fig. 5 is a cross-sectional view schematically showing a heat transfer suppression sheet for a battery pack according to a second embodiment of the present invention.
[Fig. 6] Fig. 6 is a cross-sectional view schematically showing a heat transfer suppression sheet for a battery pack according to a third embodiment of the present invention.
[Fig. 7] Fig. 7 is a cross-sectional view schematically showing a heat transfer suppression sheet for a battery pack according to a fourth embodiment of the present invention.
[Fig. 8A] Fig. 8A is a cross-sectional view schematically showing a heat transfer suppression sheet for a battery pack according to a fifth embodiment of the present invention.
[Fig. 8B] Fig. 8B is a cross-sectional view schematically showing the heat transfer suppression sheet for a battery pack according to the fifth embodiment of the present invention when an abnormality occurs.
[Fig. 9A] Fig. 9A is a cross-sectional view schematically showing a heat transfer suppression sheet for a battery pack according to a sixth embodiment of the present invention.
[Fig. 9B] Fig. 9B is a cross-sectional view schematically showing the heat transfer suppression sheet for a battery pack according to the sixth embodiment of the present invention when an abnormality occurs.
[Fig. 10] Fig. 10 is a plan view schematically showing another example of the heat-insulating material used in the heat transfer suppression sheets for a battery pack according to the first to sixth embodiments of the present invention.
[Fig. 11] Fig. 11 is a plan view schematically showing still another example of the heat-insulating material used in the heat transfer suppression sheets for a battery pack according to the first to sixth embodiments of the present invention.
[Fig. 12] Fig. 12 is a plan view schematically showing a heat transfer suppression sheet for a battery pack using two kinds of adhesives having different melting temperatures.
[Fig. 13] Fig. 13 is a plan view schematically showing another example of the heat transfer suppression sheet for a battery pack using two kinds of adhesives having different melting temperatures.
[Fig. 14] Fig. 14 is a plan view schematically showing still another example of the heat transfer suppression sheet for a battery pack using two kinds of adhesives having different melting temperatures.

### DESCRIPTION OF EMBODIMENTS

The present inventors have intensively studied to provide a heat transfer suppression sheet for a battery pack that can cool individual battery cells during normal use in which relatively low-temperature heat is generated while suppressing the propagation of heat between the battery cells in the case of abnormality in which high-temperature heat is generated.

As a result, the present inventors have found that when a sealed gap is formed between a heat-insulating material and a covering material during normal use, and when a communication opening that allows the gap to communicate with the outside of the covering material is formed at a temperature of 60°C or more, the above problems can be solved.

That is, during normal use in which the temperature of the battery cells is relatively low, since a sealed gap is present, the moisture evaporated from the heat-insulating material can stay in the gap, and the battery cells can be effectively cooled by utilizing the heat of vaporization during evaporation.

When an abnormality occurs in which the temperature of the battery cells is high, a communication opening that allows the gap to communicate with the outside of the covering material is formed, and the heated steam is released to the outside through the communication opening, and thus the propagation of heat between the battery cells can be suppressed.

Hereinafter, embodiments of the present invention will be described in detail with reference to the drawings. The present invention is not limited to the embodiments described below, and can be freely changed and implemented without departing from the gist of the present invention.

In the following description, "to" means that the value is equal to or larger than a lower limit value and equal to or smaller than an upper limit value.

### [1. Heat Transfer Suppression Sheet for Battery Pack]

Hereinafter, the heat transfer suppression sheet for a battery pack according to the present embodiment will be described in order from a first embodiment to a sixth embodiment. Then, other examples of the heat-insulating material according to the present embodiment, the heat-insulating material, the covering material, and the like constituting the heat transfer suppression sheet for a battery pack according to the present embodiment will be described. Further, a method for manufacturing the heat transfer suppression sheet for a battery pack according to the present embodiment will be described.

### <First Embodiment>

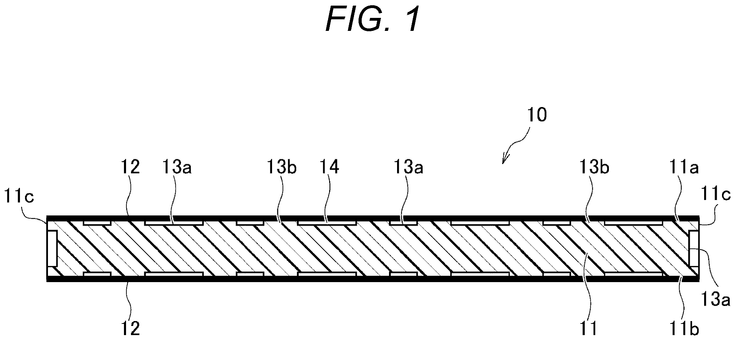

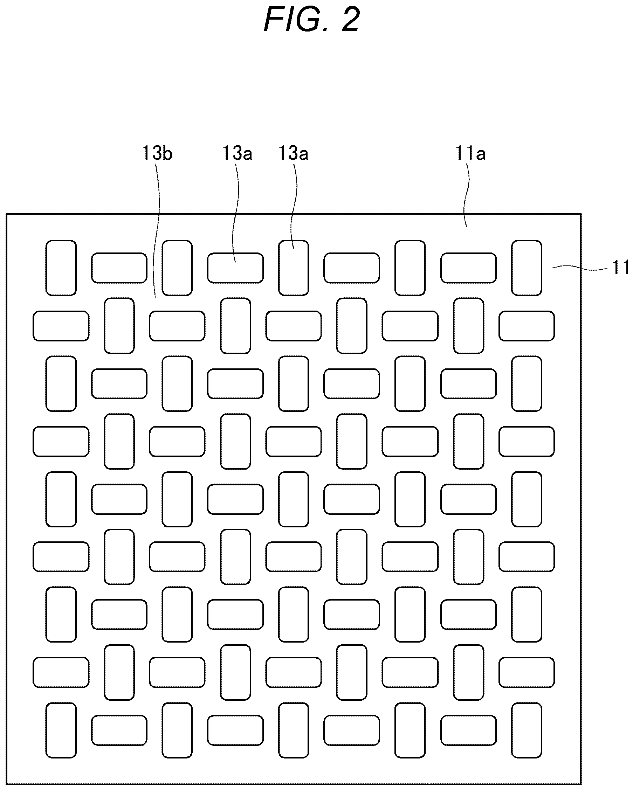

Fig. 1 is a cross-sectional view schematically showing a heat transfer suppression sheet for a battery pack according to the first embodiment. Fig. 2 is a plan view schematically showing a heat-insulating material used in the heat transfer suppression sheet for a battery pack according to the first embodiment. Hereinafter, a heat transfer suppression sheet 10 for a battery pack may be simply referred to as the heat transfer suppression sheet 10.

The heat transfer suppression sheet 10 for a battery pack according to the present embodiment includes a heat-insulating material 11, and covering materials 12 covering a surface 11a and a back surface 11b which are main surfaces of the heat-insulating material 11. In the present embodiment, the covering material 12 does not cover end surfaces 11c of the heat-insulating material 11. As will be described later, when the heat transfer suppression sheet 10 and battery cells are laminated, the surface 11a and the back surface 11b of the heat-insulating material 11 refer to surfaces facing the battery cells, and the end surfaces 11c refer to four surfaces parallel to a thickness direction of the heat transfer suppression sheet 10.

The heat-insulating material 11 contains, for example, inorganic particles and inorganic fibers containing crystal water or adsorbed water, and the crystal water or the adsorbed water has the property of releasing moisture when heated. As shown in Figs. 1 and 2, concave portions 13a are regularly formed on the surface 11a of the heat-insulating material 11, and a region where the concave portions 13a are not formed substantially constitutes convex portions 13b.

The concave portions 13a have, for example, a rectangular shape in a plan view, and as shown in Fig. 2, concave portions whose longitudinal directions are parallel to one side of the heat-insulating material 11 and concave portions whose longitudinal directions are perpendicular to one side of the heat-insulating material 11 are alternately disposed.

The covering material 12 is, for example, a polymer film that melts at a temperature of 60°C or more, and the convex portion 13b of the heat-insulating material 11 is bonded to the covering material 12 with an adhesive (not shown). In the present embodiment, an adhesive made of an organic substance or an inorganic substance is used, and the adhesive has the property of melting at 60°C or more.

Since the region where the concave portions 13a are formed is not in contact with the covering material 12, as a result, gaps 14 are formed between the heat-insulating material 11 and the covering material 12. Since the convex portions 13b around the gaps 14 is bonded to the covering material 12, the gaps 14 are always sealed at a temperature of less than 60°C.

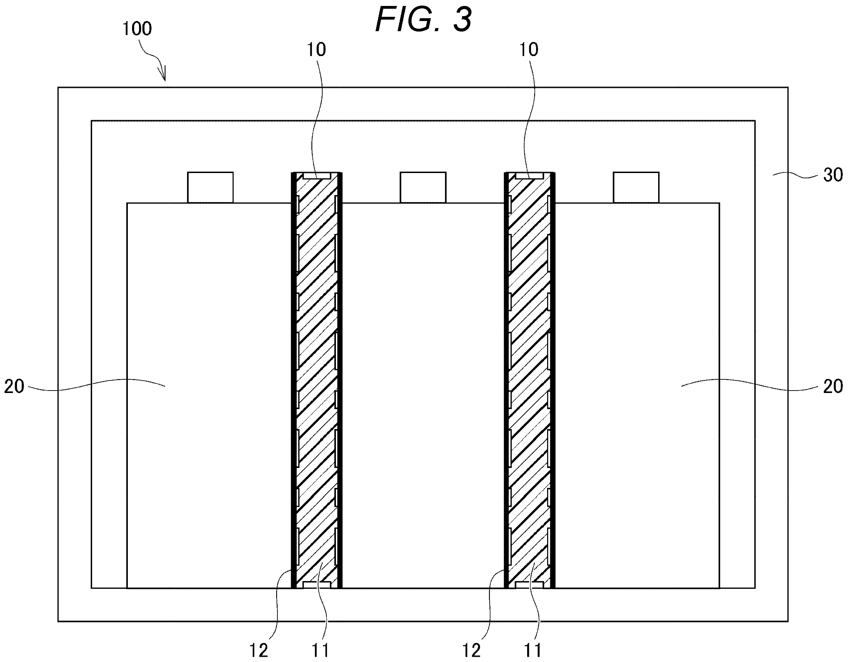

Fig. 3 is a cross-sectional view schematically showing a battery pack to which the heat transfer suppression sheet for a battery pack according to the first embodiment is applied. A battery pack 100 includes a battery case 30, battery cells 20 housed in the battery case 30, and the heat transfer suppression sheets 10 interposed between the battery cells 20. The battery cells 20 are connected in series or in parallel by a bus bar (not shown) or the like.

For example, the battery cell 20 is preferably a lithium-ion secondary battery, but is not particularly limited thereto, and may be applied to other secondary batteries.

In the heat transfer suppression sheet 10 configured as described above, when the temperature rises in a relatively low temperature range from room temperature (about 20°C) to about 150°C, which is a temperature range of the battery cell 20 during normal use, heat is also propagated to the heat-insulating material 11. In the present embodiment, since the heat-insulating material 11 contains inorganic particles containing crystal water or adsorbed water, and the crystal water or the adsorbed water is a material that releases moisture when heated, moisture is evaporated from the inorganic particles when the heat-insulating material 11 is heated. Part of the evaporated moisture stays in the gap 14, and the other part is released from the end surface 11c of the heat transfer suppression sheet 10. At this time, since the heat-insulating material 11 loses the heat of vaporization and is cooled, the heat transfer suppression sheet 10 can effectively cool the battery cell 20.

When the use (that is, charge and discharge) of the battery pack 100 is stopped after the battery cell 20 is effectively cooled, the water vapor remaining in the gap 14 is cooled and forms water droplets, which are absorbed into the heat-insulating material 11 over time. Then, when the battery pack 100 is used next time, the moisture in the heat-insulating material 11 is evaporated again, the heat-insulating material 11 loses the heat of vaporization, and the cycle of cooling the battery cell 20 is repeated.

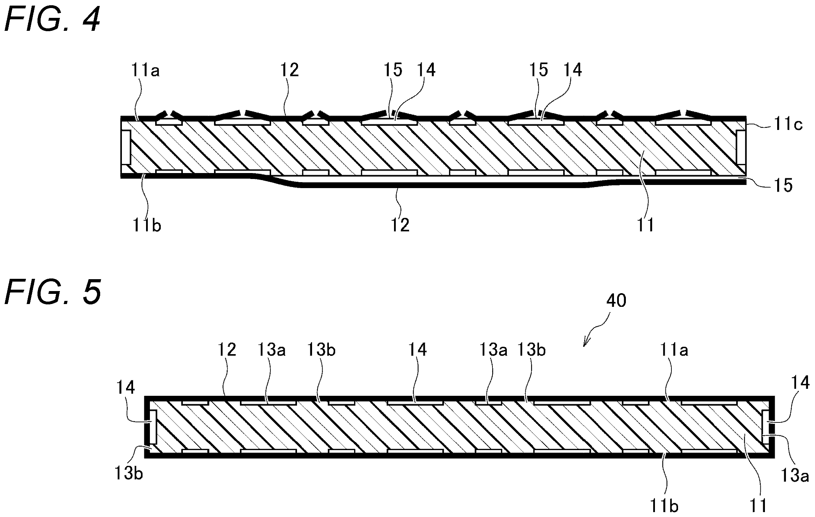

Fig. 4 is a cross-sectional view schematically showing the heat transfer suppression sheet for a battery pack according to the first embodiment when an abnormality occurs. On the surface 11a of the heat-insulating material 11, the covering material 12 is partially melted, and on the back surface 11b, an adhesive for bonding the covering material 12 to the heat-insulating material 11 is melted due to an increase in temperature.

As shown in Fig. 4, when an abnormality occurs, for example, when the temperature of the battery cell 20 rises to, for example, 200°C or more, the covering material 12 melts, and communication openings 15 that allow the gaps 14 to communicate with the outside are formed. In the case of using the covering material 12 that does not melt even at a high temperature, when the adhesive melts, the communication openings 15 that allow the gaps 14 to communicate with the outside of the heat transfer suppression sheet 10 are formed.

When the communication opening 15 is formed in this manner, the steam evaporated from the inorganic particles, staying in the gap 14, and reaching a high temperature is released to the outside of the heat transfer suppression sheet 10 through the communication opening 15. Therefore, even when thermal runaway occurs in the battery cells 20, it is possible to effectively suppress the propagation of heat between the battery cells 20.

Both the polymer film and the adhesive used in the present embodiment have the property of melting at any temperature of 60°C or more. That is, in a temperature range lower than melting temperatures of the used polymer film and adhesive, the gap 14 is always sealed. Since polymer films and adhesives have various melting temperatures depending on kinds thereof, a polymer film or an adhesive having a desired melting temperature in a range of 60°C or more can be selected as necessary.

The temperature at which a communication opening that allows the gap 14 to communicate with the outside of the covering material 12 is formed is preferably 80°C or more, and more preferably 100°C or more.

On the other hand, an upper limit of the temperature at which a communication opening that allows the gap 14 to communicate with the outside of the covering material 12 is formed is not particularly limited, but is preferably 500°C or less, more preferably 350°C or less, still more preferably 300°C or less, and particularly preferably 250°C or less.

### <Second Embodiment>

Fig. 5 is a cross-sectional view schematically showing a heat transfer suppression sheet for a battery pack according to the second embodiment.

In Figs. 5 to 9B showing the following second to sixth embodiments, the same or equivalent parts as those in the first embodiment are denoted by the same reference numerals in the drawings, and the description thereof is omitted or simplified. Since all the embodiments described below can be used in place of the heat transfer suppression sheet 10 described in the battery pack 100 shown in Fig. 3, effects and the like will be described assuming that the heat transfer suppression sheets according to the second to sixth embodiments are applied to the battery pack 100.

A heat transfer suppression sheet 40 for a battery pack according to the second embodiment includes the heat-insulating material 11, and the covering material 12 covering the surface 11a, the back surface 11b, and the end surfaces 11c which are main surfaces of the heat-insulating material 11. In the present embodiment, the concave portions 13a and the convex portions 13b are also formed on the end surfaces 11c of the heat-insulating material 11. That is, the covering material B12 formed in a bag shape with an adhesive (not shown) or the like covers the entire surface of the heat-insulating material 11, and the heat-insulating material 11 is completely sealed by the covering material 12.

In the heat transfer suppression sheet 40 configured as described above, the same effects as those of the first embodiment can also be obtained during normal use. In the second embodiment, since the heat-insulating material 11 is completely covered with the covering material 12, when the heat-insulating material 11 is heated during normal use and moisture evaporates from the inorganic particles, all the evaporated moisture stays in the gap 14 and is not released to the outside from the heat transfer suppression sheet 40. However, since the moisture is evaporated, the heat-insulating material 11 loses the heat of vaporization and is cooled, and the heat transfer suppression sheet 10 can effectively cool the battery cell 20.

In the second embodiment, since the evaporated moisture is not released to the outside, when the use of the battery pack is stopped, most of the evaporated moisture is again absorbed into the heat-insulating material 11. Therefore, according to the heat transfer suppression sheet 40 for a battery pack according to the second embodiment, it is possible to maintain the effect of cooling the battery cell 20 for a long period of time.

Further, when an abnormality occurs, the adhesive for bonding the covering materials 12 to each other is melted or the covering material 12 is melted to form the communication openings 15 between the gaps 14 and the outside as in the case shown in Fig. 4, and thus the same effects as in the first embodiment can be obtained.

### <Third Embodiment>

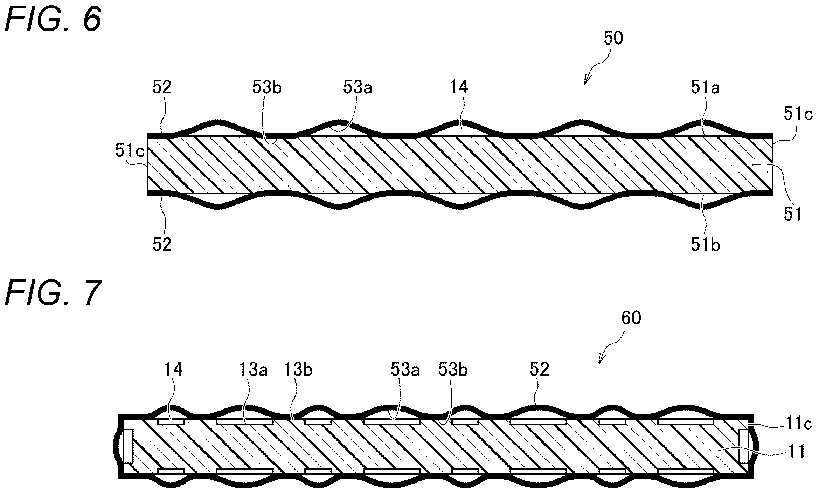

Fig. 6 is a cross-sectional view schematically showing a heat transfer suppression sheet for a battery pack according to the third embodiment.

A heat transfer suppression sheet 50 for a battery pack according to the third embodiment includes a heat-insulating material 51, and covering materials 52 covering a surface 51a and a back surface 51b of the heat-insulating material 51. In the present embodiment, as in the first embodiment, the covering material 52 does not cover end surfaces 51c of the heat-insulating material 51.

In the third embodiment, the surface of the heat-insulating material 51 is flat, and no concave portions or convex portions are formed. On the other hand, the covering material 52 is formed of a film, and the surface thereof is subjected to concave and convex processing. On a surface facing the heat-insulating material 51 in the covering material 52, concave portions 53a and convex portions 53b are formed. The convex portions 53b of the covering material 52 is bonded to the heat-insulating material 51 with an adhesive (not shown), and the sealed gaps 14 are formed between the concave portions 53a and the heat-insulating material 51.

In the heat transfer suppression sheet 50 configured as described above, the same effects as those of the first embodiment can also be obtained during normal use and when an abnormality occurs. By forming a heat transfer suppression sheet to cover the entire surface of the heat-insulating material 51 using the covering material 52 shown in the third embodiment, it is possible to maintain the effect of cooling the battery cell 20 for a long period of time as in the second embodiment.

### <Fourth Embodiment>

Fig. 7 is a cross-sectional view schematically showing a heat transfer suppression sheet for a battery pack according to the fourth embodiment.

A heat transfer suppression sheet 60 for a battery pack according to the fourth embodiment includes the heat-insulating material 11 and the covering material 52 covering the entire surface of the heat-insulating material 11. In the present embodiment, the concave portions 13a and the convex portions 13b are formed in the heat-insulating material 11. On a surface facing the heat-insulating material 11 in the covering material, the concave portions 53a recessed in a direction away from the heat-insulating material 11 and the convex portions 53b having a shape protruding toward the heat-insulating material 11 are also formed. The convex portions 53b of the covering material 52 is bonded to the convex portions 13b of the heat-insulating material 11 with an adhesive (not shown), and the sealed gaps 14 are formed between the concave portions 53a of the covering material 52 and the concave portions 13a of the heat-insulating material 11.

In the heat transfer suppression sheet 60 configured as described above, the same effects as those of the second embodiment can also be obtained during normal use and when an abnormality occurs. Since the gap 14 is formed by the concave portion 13a and the concave portion 53a, a volume of the gap 14 is increased as compared with the heat transfer suppression sheets for a battery pack according to the second and third embodiments. Therefore, moisture is easily evaporated from the heat-insulating material 11, and the effect of cooling the battery cell 20 during normal use can be further improved.

In the fourth embodiment, the covering material 52 covers the end surfaces 11c of the heat-insulating material 11, but the end surfaces 11c of the heat-insulating material 11 may be open as in the first embodiment. By opening the end surfaces 11c, since part of the evaporated moisture is released to the outside during normal use, the moisture in the heat-insulating material 11 is more easily evaporated, and the cooling effect due to the heat of vaporization can be enhanced.

In the case of abnormality, when the covering material 52 that does not melt at a high temperature is used, the communication openings 15 that allow the gaps 14 to communicate with the outside of the heat transfer suppression sheet 60 are formed when the adhesive melts, so that the effect of cooling the battery cell 20 can be obtained.

### <Fifth Embodiment>

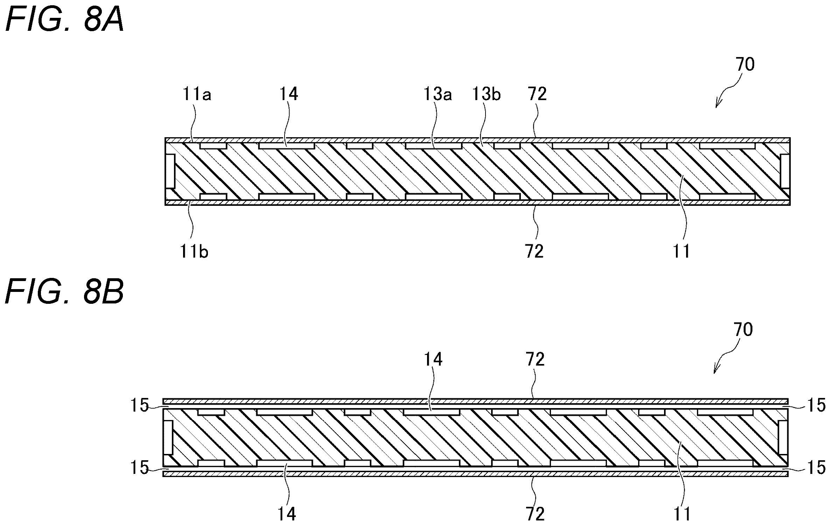

Fig. 8A is a cross-sectional view schematically showing a heat transfer suppression sheet for a battery pack according to the fifth embodiment. Fig. 8B is a cross-sectional view schematically showing the heat transfer suppression sheet for a battery pack according to the fifth embodiment when an abnormality occurs.

A heat transfer suppression sheet 70 for a battery pack according to the fifth embodiment includes the heat-insulating material 11, and covering materials 72 covering the surface 11a and the back surface 11b of the heat-insulating material 11. In the present embodiment, unlike the first embodiment, a covering material (metal plates) 72 made of metal is used as the covering material. The convex portions 13b of the heat-insulating material 11 is bonded to the covering material 72 with an adhesive (not shown), and the sealed gaps 14 are formed between the concave portions 13a of the heat-insulating material 11 and the covering material 72.

In the heat transfer suppression sheet 70 configured as described above, the same effects as those of the first embodiment can also be obtained during normal use.

As shown in Fig. 8B, when an abnormality occurs, the adhesive bonding the convex portions 13b of the heat-insulating material 11 to the covering material 72 is melted, and the covering material 72 is peeled off from the heat-insulating material 11. Therefore, since the communication openings 15 that allow the gaps 14 to communicate with the outside of the heat transfer suppression sheet 70 are formed, the battery cell 20 can be effectively cooled.

### <Sixth Embodiment>

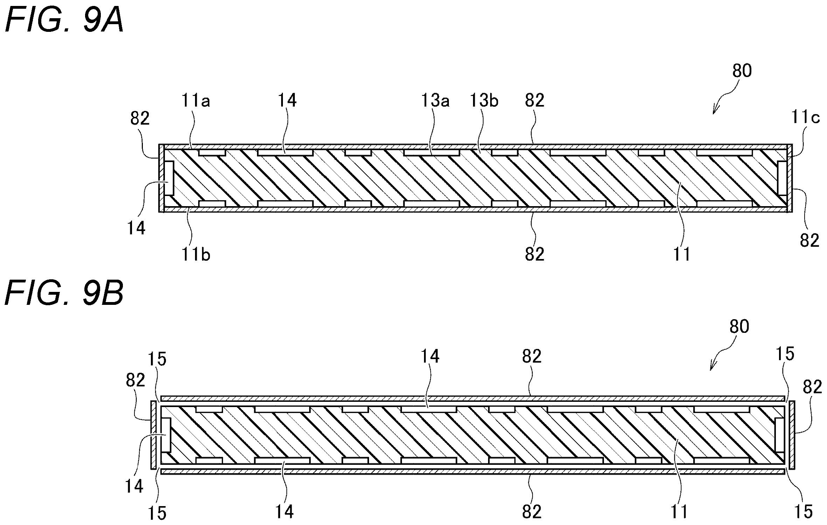

Fig. 9A is a cross-sectional view schematically showing a heat transfer suppression sheet for a battery pack according to the sixth embodiment. Fig. 9B is a cross-sectional view schematically showing the heat transfer suppression sheet for a battery pack according to the sixth embodiment when an abnormality occurs.

In a heat transfer suppression sheet 80 for a battery pack according to the sixth embodiment, not only the surface 11a and the back surface 11b of the heat-insulating material 11, but also the end surfaces 11c are covered with metal covering materials (metal plates) 82. That is, in the present embodiment, all of the surface 11a, the back surface 11b, and the end surfaces 11c in four directions of the heat-insulating material 11 are covered with covering materials 82, and the covering materials are also bonded to each other with an adhesive (not shown).

In the heat transfer suppression sheet 80 configured as described above, the same effects as those of the second embodiment can also be obtained during normal use.

As shown in Fig. 9B, when an abnormality occurs, the adhesive bonding the convex portions 13b of the heat-insulating material 11 to the covering material 82 is melted, and the covering material 82 and the heat-insulating material 11 are separated from each other. At the same time, the adhesive for bonding the covering materials 82 to each other is also melted, and the covering materials 82 are separated. As a result, the communication openings 15 that allow the gaps 14 to communicate with the outside of the heat transfer suppression sheet 80 are formed, and the battery cell 20 can be effectively cooled.

In the sixth embodiment, the surface 11a, the back surface 11b, and the end surfaces 11c of the heat-insulating material 11 are covered with the covering materials 82, and the covering materials 82 are bonded to each other with an adhesive, but the present invention may use a single metal sheet. For example, the heat-insulating material 11 may be sandwiched between one metal sheet folded in two parts, and in the vicinity of the end surfaces 11c, a contact region between the metal sheet covering the surface 11a of the heat-insulating material 11 and the metal sheet covering the back surface 11b can be adhered with an adhesive. With such a configuration, the same effects as those of the sixth embodiment can also be obtained.

The heat transfer suppression sheets for a battery pack according to the first to sixth embodiments have been described in order. Next, another example of the heat-insulating material used in the heat transfer suppression sheets for a battery pack according to the first to sixth embodiments will be described.

### <Another Example of Heat-insulating Material>

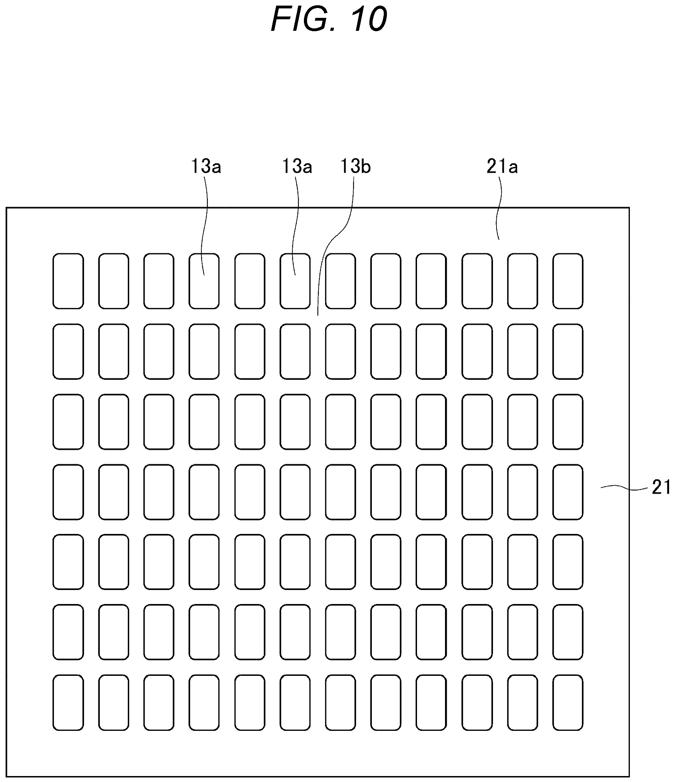

Fig. 10 is a plan view schematically showing another example of the heat-insulating material used in the heat transfer suppression sheets for a battery pack according to the first to sixth embodiments. In the first to sixth embodiments, an example using the heat-insulating material 11 shown in Fig. 2 has been given, but the shape of the heat-insulating material is not particularly limited.

As shown in Fig. 10, concave portions 13a are regularly formed on a surface 21a of a heat-insulating material 21, and a region where the concave portions 13a are not formed substantially constitutes the convex portions 13b.

In the present embodiment, the concave portions 13a have, for example, a rectangular shape in a plan view, and all the concave portions 13a are disposed such that longitudinal directions thereof are parallel to one side of the heat-insulating material 21.

The heat-insulating material 21 configured as described above can also be applied to the heat transfer suppression sheets for a battery pack according to the first to sixth embodiments, and the same effects as those of the first to sixth embodiments can be obtained.

### <Still Another Example of Heat-insulating Material>

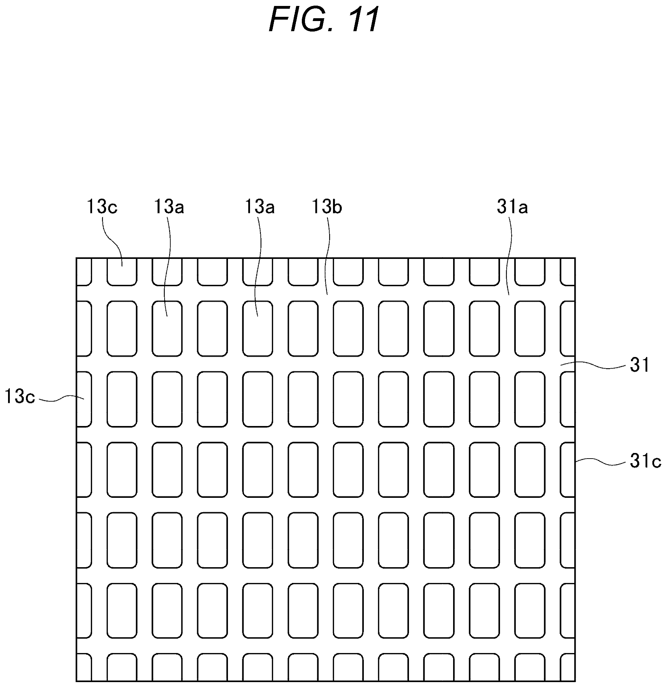

Fig. 11 is a plan view schematically showing still another example of the heat-insulating material used in the heat transfer suppression sheets for a battery pack according to the first to sixth embodiments.

In the heat-insulating material 11 shown in Fig. 2 and the heat-insulating material 21 shown in Fig. 10, all the concave portions 13a are sealed by the covering material, but the present invention is not limited thereto.

As shown in Fig. 11, concave portions 13a are regularly formed on a surface 31a of a heat-insulating material 31, and a region where the concave portions 13a are not formed substantially constitutes the convex portions 13b. However, the concave portions 13c formed in the vicinity of end surfaces 31c of the heat-insulating material 31 reach the end surfaces 31c of the heat-insulating material 31.

For example, when the heat-insulating material 11 in the first embodiment is replaced with the heat-insulating material 31, the concave portions 13c formed in the vicinity of the end surfaces 31c of the heat-insulating material 31 do not constitute sealed gaps. However, since sealed gaps are formed between some of the concave portions 13a and the covering material 12, the same effects as those of the first to sixth embodiments can be obtained.

Next, the heat-insulating material, the covering material, the adhesive constituting the heat transfer suppression sheet for a battery pack according to the present embodiment and a thickness of the heat transfer suppression sheet will be described in detail.

### <Heat-insulating Material>

The heat-insulating material used in the heat transfer suppression sheet for a battery pack according to the present embodiment contains at least one of inorganic particles or inorganic fibers.

The inorganic particles are preferably inorganic hydrates or hydrous porous materials. The inorganic hydrates receive heat from the battery cell 20, thermally decompose when the temperature is equal to or higher than a thermal decomposition start temperature, and release crystal water thereof, thereby cooling the battery cell 20. The inorganic hydrates form porous bodies after releasing the crystal water, and an effective heat insulation effect can be obtained due to a large number of air holes.

As the inorganic particles, a single kind of inorganic particles may be used, or two or more kinds of inorganic hydrate particles may be used in combination. Since the inorganic hydrates have different thermal decomposition start temperatures depending on their kinds, the battery cell 20 can be cooled in multiple stages by using two or more kinds of inorganic hydrate particles in combination.

Specific examples of the inorganic hydrates include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), gallium hydroxide (Ga(OH)₃), and the like.

Examples of the fibrous inorganic hydrates include fibrous calcium silicate hydrates.

Specific examples of the hydrous porous materials include zeolite, kaolinite, montmorillonite, acid clay, diatomaceous earth, sepiolite, wet silica, dry silica, aerogel, mica, vermiculite, and the like.

Further, examples of the inorganic fibers include alumina fibers, silica fibers, alumina silicate fibers, rock wool, magnesium silicate fibers, alkaline earth silicate fibers, glass fibers, zirconia fibers, potassium titanate fibers, and the like. Among these inorganic fibers, magnesium silicate fibers can be suitably used as a material that releases moisture when heated.

As the inorganic fibers, a single kind of inorganic fibers may be used, or two or more kinds of inorganic fibers may be used in combination.

In addition to the inorganic particles and the inorganic fibers, organic fibers, organic binders, or the like may be blended into the heat-insulating material as necessary. The organic fibers and the organic binders are useful for reinforcing the heat-insulating material and improving the moldability thereof.

The inorganic particles and the inorganic fibers contained in the heat-insulating material do not necessarily contain a material that releases moisture when heated. During the manufacture of the heat-insulating material, a small amount of moisture is inevitably contained, and therefore, in a case where the temperature of the battery cell 20 rises during normal use and when an abnormality occurs, the moisture contained in the heat-insulating material evaporates, thereby obtaining an effect of cooling the battery cell 20.

In the present embodiment, the heat-insulating material may contain at least one of the inorganic particles or the inorganic fibers, and with respect to a total mass of the heat transfer suppression sheet, a content of the inorganic particles is preferably 20% or more by mass and 80% or less by mass, and a content of the inorganic fibers is preferably 5% or more by mass and 70% or less by mass. By setting the contents as described above, the shape retention, the pressing force resistance, and the wind pressure resistance can be improved by the inorganic fibers, and the retention capacity of the inorganic particles can be secured.

Organic fibers, organic binders, or the like may be blended into the heat transfer suppression sheet according to the present embodiment as necessary. The organic fibers and the organic binders are useful for reinforcing the heat transfer suppression sheet and improving the moldability thereof.

### <Covering Material>

As the covering material, a polymer film or a metal film (metal plate) can be used.

Examples of the polymer film include polyimide, polycarbonate, PET, p-phenylene sulfide, polyetherimide, cross-linked polyethylene, flame-retardant chloroprene rubber, polyvinylidene fluoride, rigid vinyl chloride, polybutylene terephthalate, PTFE, PFA, FEP, ETFE, rigid PCV, flame-retardant PET, polystyrene, polyether sulfone, polyamide-imide, polyacrylonitrile, polyethylene, polypropylene, polyamide, and the like.

In the present invention, the covering material is configured such that a communication opening that allows the gap to communicate with the outside of the covering material is formed at a temperature of 60°C or more. As described above, examples of forming the communication opening include melting of the polymer film used as the covering material and melting of the adhesive for bonding the covering materials to each other or bonding the covering material to the heat-insulating material.

To form the communication opening that allows the gap to communicate with the outside of the covering material at a temperature of 60°C or more, for example, the polymer film may be melted at any temperature of 60°C or more. Since the polymer film has a melting point of 60°C to 600°C, the covering material (polymer film) can reliably seal the gap at a temperature of less than 60°C, and can form the communication opening at any temperature of 60°C or more.

In the present embodiment, when a polymer film is used as the covering material, the melting temperature of the polymer film is preferably 60°C or more, more preferably 80°C or more, and still more preferably 100°C or more.

On the other hand, the melting temperature of the polymer film is preferably 500°C or less, more preferably 350°C or less, still more preferably 300°C or less, and particularly preferably 250°C or less.

Examples of the metal film include aluminum foil, stainless steel foil, and copper foil.

### <Adhesive>

In the present embodiment, as a method of sealing the gap formed between the heat-insulating material and the covering material, a method of bonding the heat-insulating material to the covering material or a method of bonding the covering materials to each other can be applied.

Examples of an adhesive for bonding the heat-insulating material to the covering material include those using urethane, polyethylene, polypropylene, polystyrene, nylon, polyester, vinyl chloride, vinylon, acrylic resin, silicone, and the like as a raw material.

The adhesive can also be applied as an adhesive for bonding the covering materials to each other.

In the present embodiment, when a covering material that does not melt at a temperature of 60°C or more is used, for example, the melting temperature of the adhesive for bonding the covering materials to each other or bonding the covering material to the heat-insulating material may be 60°C or more. That is, when the adhesive melts at a temperature of 60°C or more, the covering material can reliably seal the gap at a temperature of less than 60°C, and the communication opening that allows the gap to communicate with the outside of the covering material can be formed at any temperature of 60°C or more.

In this case, the melting temperature of the adhesive is preferably 60°C or more, more preferably 80°C or more, and still more preferably 100°C or more.

On the other hand, the melting temperature of the adhesive is preferably 500°C or less, more preferably 350°C or less, still more preferably 300°C or less, and particularly preferably 250°C or less.

As a method of sealing the gap formed between the heat-insulating material and the covering material, a method of covering the entire heat-insulating material with the covering material can be applied.

Examples of the method of covering the entire heat-insulating material with the covering material include lamination (dry lamination, thermal lamination), pouch lamination, vacuum packaging, vacuum lamination, shrink packaging, and caramel packaging.

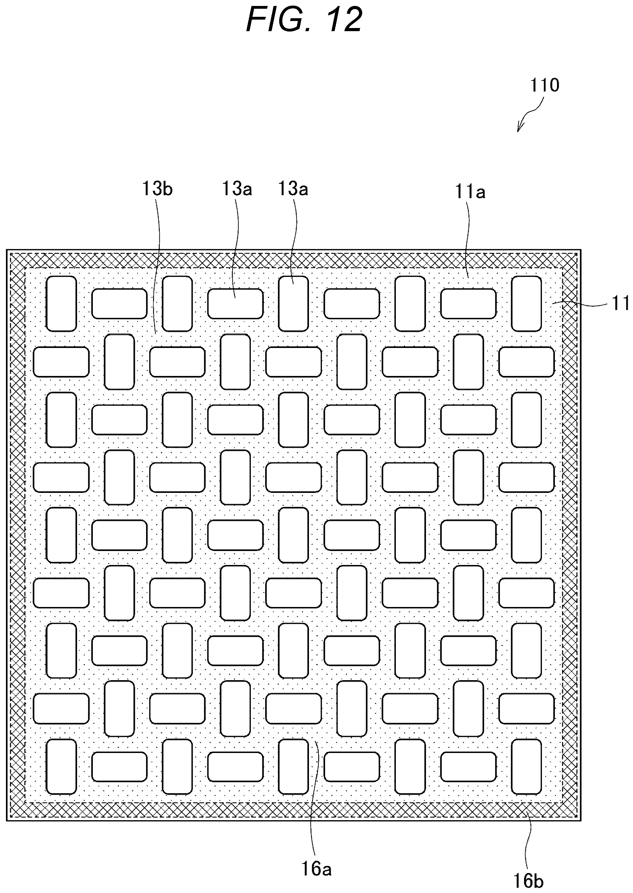

As the adhesive for bonding the heat-insulating material to the covering material or bonding the covering materials to each other, adhesives having different melting temperatures may be used such that the adhesives melt stepwise in regions as the temperature rises. An example using adhesives will be described below with reference to the drawings. The following examples shown in Figs. 12 to 14 are modifications of the heat transfer suppression sheet 10 for a battery pack according to the first embodiment shown in Figs. 1 and 2.

Fig. 12 is a plan view schematically showing a heat transfer suppression sheet for a battery pack using two kinds of adhesives having different melting temperatures.

As shown in Fig. 12, in a heat transfer suppression sheet 110 for a battery pack, in a region of the convex portions 13b of the heat-insulating material 11, an adhesive 16b is used in peripheral edges in the vicinity of end surfaces, and an adhesive 16a is used in a region inside the peripheral edges. The adhesive 16a and the adhesive 16b have different melting temperatures, and specifically, the melting temperature of the adhesive 16b is higher than the melting temperature of the adhesive 16a. The melting temperature of the covering material is higher than the melting temperature of the adhesive 16b.

In the heat transfer suppression sheet 110 configured as described above, at a temperature lower than the melting temperature of the adhesive 16a in a first stage, gaps between the concave portions 13a and the covering material are sealed. Therefore, when the heat-insulating material 11 is heated and moisture is evaporated from the inorganic particles, all the evaporated moisture stays in the gaps and is not released to the outside from the heat transfer suppression sheet 110, and the heat-insulating material 11 loses the heat of vaporization and is cooled due to the evaporation of the moisture.

Thereafter, in a second stage, when the temperature of the battery cell further rises to be equal to or higher than the melting temperature of the adhesive 16a and lower than the melting temperature of the adhesive 16b, the region adhered by the adhesive 16a is separated, volumes of the gaps increase, and thus moisture is easily evaporated from the heat-insulating material 11. Since the heated steam does not stay in a fixed position and can move over a wider region than in the first stage, the heat transfer suppression sheet 110 can effectively cool the battery cell.

Thereafter, in a third stage, when the temperature of the battery cell is equal to or higher than the melting temperature of the adhesive 16b, the region adhered by the adhesive 16b is separated, and communication openings that allow the gaps to communicate with the outside of the heat transfer suppression sheet 110 are formed. As a result, the high-temperature steam staying inside the region of the adhesive 16b is released at once. Therefore, even when thermal runaway occurs in the battery cells, it is possible to effectively suppress the propagation of heat between the battery cells.

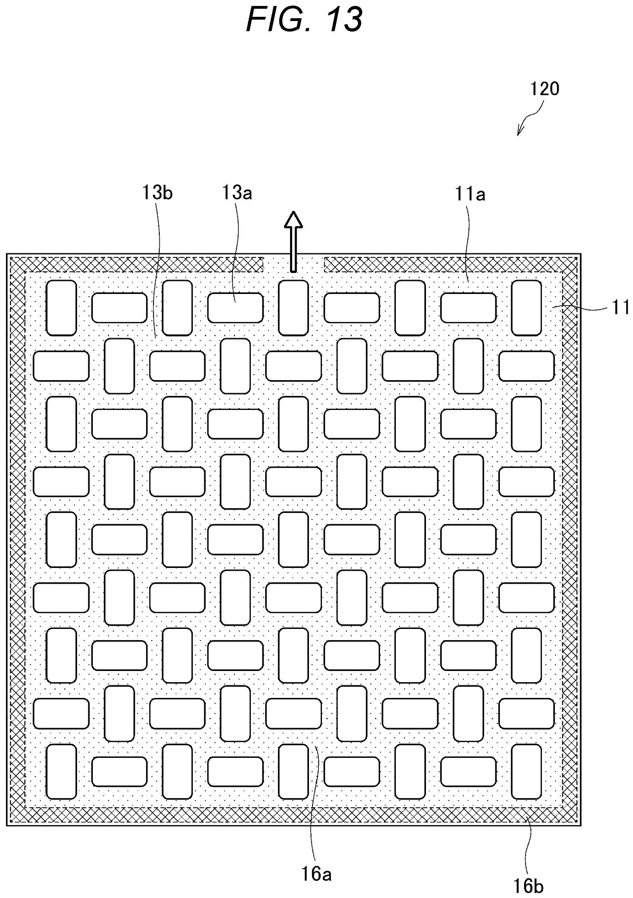

Fig. 13 is a plan view schematically showing another example of the heat transfer suppression sheet for a battery pack using two kinds of adhesives having different melting temperatures.

As shown in Fig. 13, in a heat transfer suppression sheet 120, the adhesive 16b having a higher melting temperature is used in the peripheral edges of the region of the convex portions 13b of the heat-insulating material 11, as in the heat transfer suppression sheet 110 shown in Fig. 12. However, the same adhesive 16a, which is used in the region inside the peripheral edges and has a lower melting temperature, is used only in part of the peripheral edges.

In the heat transfer suppression sheet 120 configured as described above, at a temperature lower than the melting temperature of the adhesive 16a in a first stage, gaps between the concave portions 13a and the covering material 12 are sealed. Therefore, as in the heat transfer suppression sheet 110 shown in Fig. 12, moisture is evaporated from the heat-insulating material 11 toward the gaps, and the heat-insulating material 11 loses the heat of vaporization and is cooled.

Thereafter, in a second stage, when the temperature of the battery cell further rises to be equal to or higher than the melting temperature of the adhesive 16a, the region adhered by the adhesive 16a is separated, and thus moisture is easily evaporated from the heat-insulating material 11. Since the adhesive 16a having a low melting temperature is used only in part of the peripheral edges, this region serves as a communication opening that allows the gaps to communicate with the outside of the heat transfer suppression sheet 110. Therefore, as shown by an arrow in Fig. 13, the high-temperature steam is released from the communication opening, and it is possible to effectively suppress the propagation of heat between the battery cells.

As shown in Fig. 13, when the same adhesive 16a, which is used in the region inside the peripheral edges and has a lower melting temperature, is used only in part of the peripheral edges, it is possible to easily control the position where the high-temperature steam (moisture) is released. Therefore, it is possible to prevent water exposure to predetermined parts in the battery pack.

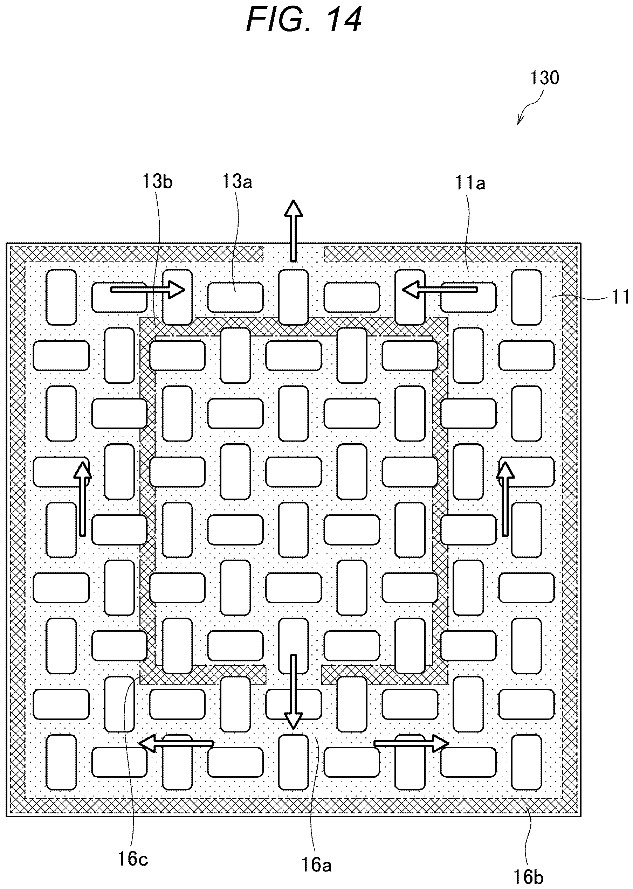

Fig. 14 is a plan view schematically showing still another example of the heat transfer suppression sheet for a battery pack using two kinds of adhesives having different melting temperatures.

As shown in Fig. 14, in a heat transfer suppression sheet 130, the adhesive 16b having a high melting temperature is used in the peripheral edges of the region of the convex portions 13b of the heat-insulating material 11, as in the heat transfer suppression sheet 120 shown in Fig. 13. However, the adhesive 16a having a low melting temperature is used only in part of the peripheral edges, and this region serves as a communication opening at a high temperature. An adhesive 16c having the same melting temperature as that of the adhesive 16b is used in a region separated at a predetermined interval from the peripheral edges inside the region in which the adhesive 16b is used. In the region where the adhesive 16c is used, the adhesive 16a having a low melting temperature is used in part of the opposite side of the region serving as the communication opening.

In the heat transfer suppression sheet 130 configured as described above, in a first stage, as in the heat transfer suppression sheet 120 shown in Fig. 13, moisture is evaporated from the heat-insulating material 11 toward the gaps, and the heat-insulating material 11 loses the heat of vaporization and is cooled.

Thereafter, when the adhesive 16a is melted in a second stage, a moisture release path is formed as shown by an arrow in Fig. 14. As a result, since the high-temperature steam moves along the release path and is released to the outside through the communication opening, the cooling effect can be further improved.

The adhesive 16a, the adhesive 16b, and the adhesive 16c may all have different melting temperatures, and the regions in which the respective adhesives are used can be freely determined according to the purpose.

As described above, the heat transfer suppression sheets 110, 120, and 130 shown in Figs. 12 to 14 are designed such that the adhesives melt stepwise in regions as the temperature of the battery cell rises.

Therefore, it is possible to adjust the timing at which the steam staying in the gaps is released, provide a steam release opening at any position, or provide a release path in a free manner.

To obtain the effects described above, the adhesives may melt stepwise in regions as the temperature rises, and in addition to the method of using adhesives having different melting temperatures, a method of applying the adhesive to regions in different application amounts can be used.

In Figs. 12 to 14, in the heat transfer suppression sheets in which the covering material is bonded to the surface and the back surface of the heat-insulating material 11, the case where the adhesive for bonding the heat-insulating material 11 to the covering material melts stepwise has been described, but the present invention is not limited thereto. For example, in a configuration in which the heat-insulating material 11 is completely covered with a covering material, a method of adjusting the melting temperature or the application amount of the adhesive depending on the region can also be applied. Specifically, in the case where the covering materials are bonded to each other in the vicinity of the end surfaces of the heat-insulating material 11, by setting a high melting temperature adhesive for bonding the covering materials to each other and a low melting temperature adhesive for bonding the heat-insulating material 11 to the covering material, the same effects as those of the heat transfer suppression sheet 110 can be obtained.

### <Thickness of Heat Transfer Suppression Sheet>

In the present embodiment, the thickness of the heat transfer suppression sheet is not particularly limited, but is preferably in a range of 0.05 mm to 6 mm. If the thickness of the heat transfer suppression sheet is less than 0.05 mm, sufficient mechanical strength cannot be imparted to the heat transfer suppression sheet. On the other hand, if the thickness of the heat transfer suppression sheet exceeds 6 mm, it may be difficult to form the heat transfer suppression sheet.

Next, a method for manufacturing the heat transfer suppression sheet for a battery pack according to the present embodiment will be described.

### <Method for Manufacturing Heat Transfer Suppression Sheet>

The heat-insulating material used in the heat transfer suppression sheet according to the present embodiment can be manufactured by molding a material containing at least one of inorganic particles or inorganic fibers by a dry molding method or a wet molding method, for example. As the dry molding method, for example, a press molding method (dry press molding method) and an extrusion molding method (dry extrusion molding method) can be used.

### (Method for Manufacturing Heat-insulating Material Using Dry Press Molding Method)

In the dry press molding method, inorganic particles and inorganic fibers, and, if necessary, organic fibers, organic binders, and the like are put into a mixer such as a V-shaped mixer at a predetermined ratio. Then, after the materials put into the mixer are sufficiently mixed, the mixture is put into a predetermined mold and press-molded to obtain a heat-insulating material. During press molding, heating may be performed as necessary.

A heat-insulating material having concave portions and convex portions can be formed by, for example, a pressing method using a mold having a concave and convex shape during press molding.

A press pressure during press molding is preferably in a range of 0.98 MPa or more and 9.80 MPa or less. If the press pressure is less than 0.98 MPa, the strength of the obtained heat-insulating material may not be secured and the heat-insulating material may collapse. On the other hand, if the press pressure exceeds 9.80 MPa, the workability may be deteriorated due to excessive compression, or due to an increase in the bulk density, solid heat transfer may increase and heat insulating properties may be decreased.

In the case of using the dry press molding method, it is preferable to use an ethylene-vinyl acetate copolymer (EVA) as the organic binder, but any organic binder that is generally used in the case of using the dry press molding method can be used without particular limitation.

### (Method for Manufacturing Heat-insulating Material Using Dry Extrusion Molding Method)

In the dry extrusion molding method, a paste is prepared by adding water to inorganic particles and inorganic fibers and, if necessary, organic fibers and organic binders as binders, followed by kneading the mixture with a kneader. Then, the obtained paste is extruded from a slit-shaped nozzle using an extruder and further dried to obtain a heat-insulating material. In the case of using the dry extrusion molding method, it is preferable to use methylcellulose, water-soluble cellulose ether, or the like as the organic binder, but any organic binder that is generally used in the case of using the dry extrusion molding method can be used without particular limitation.

Examples of the method for manufacturing the heat-insulating material having concave portions and convex portions by the dry extrusion molding method include a method of scraping a surface of a sheet before drying obtained by the extrusion from a slit-shaped nozzle into a desired concave and convex shape.

### (Method for Manufacturing Heat-insulating Material Using Wet Molding Method)

In the wet molding method, inorganic particles and inorganic fibers, and, if necessary, organic binders as binders, are mixed in water and stirred with a stirrer to prepare a mixed solution. Then, the obtained mixed solution is poured into a molding machine having a mesh for filtration formed on a bottom surface, and the mixed solution is dehydrated through the mesh, whereby a wet sheet is prepared. Thereafter, the obtained wet sheet is heated and pressurized, whereby a heat-insulating material can be obtained.

Before the heating and pressurizing step, a ventilation drying treatment may be performed in which hot air is passed through the wet sheet to dry the sheet, or the wet sheet may be heated and pressurized in a wet state without performing the ventilation drying treatment.

In the case of using the wet molding method, an acrylic emulsion using polyvinyl alcohol (PVA) can be selected as the organic binder.

Examples of the method for manufacturing a heat-insulating material having concave portions and convex portions by the wet molding method include a method of press-molding a wet sheet using a mold having a concave and convex shape before heating and pressurization.

### (Method for Manufacturing Covering Material)

Examples of the method for manufacturing the covering material having concave portions and convex portions include a method in which the above polymer films or metal films of general purpose manufactured with a desired thickness can be used, and press molding is performed using a mold having a concave and convex shape.

### (Method for Manufacturing Heat Transfer Suppression Sheet)

The heat transfer suppression sheet according to the present embodiment can be manufactured, for example, by applying an adhesive to the heat-insulating material or the covering material obtained as described above and bonding the heat-insulating material to the covering material.

Examples of a method of covering the entire heat-insulating material with the covering material include a method of sandwiching the heat-insulating material between two covering materials cut larger than a surface of the heat-insulating material or between folded covering materials, and bonding the covering materials to each other by thermocompression bonding or an adhesive around the heat-insulating material.

### [2. Battery Pack]

A battery pack according to the present embodiment is a battery pack in which battery cells are connected in series or in parallel, and the heat transfer suppression sheet for a battery pack according to the present embodiment is interposed between the battery cells. Specifically, for example, as shown in Fig. 3, in the battery pack 100, battery cells 20 are disposed side by side, connected in series or in parallel and accommodated in the battery case 30, and the heat transfer suppression sheets 10 are interposed between the battery cells 20.

In such a battery pack 100, since the heat transfer suppression sheet 10 is interposed between the battery cells 20, the individual battery cells 20 can be cooled during normal use.

Even when one of the battery cells 20 has thermal runaway and reaches a high temperature, swells, or catches fire, due to the heat transfer suppression sheet 10 according to the present embodiment, the propagation of heat between the battery cells 20 can be suppressed. Therefore, the chain of thermal runaway can be prevented, and adverse effects on the battery cell 20 can be minimized.

Although various embodiments have been described above with reference to the drawings, it is needless to say that the present invention is not limited to such examples. It is apparent to those skilled in the art that various changes and modifications can be conceived within the scope of the claims, and it is understood that such changes and modifications are also encompassed within the technical scope of the present invention.

### REFERENCE SIGNS LIST

10, 40, 50, 60, 70, 80, 110, 120, 130 heat transfer suppression sheet for battery pack 11, 21, 31, 51 heat-insulating material
12, 52, 72, 82 covering material
13a, 13c, 53a concave portion
13b, 53b convex portion
14 gap
15 communication opening
20 battery cell
30 battery case
100 battery pack

## Claims

1. A heat transfer suppression sheet (10; 40; 50; 60; 70; 80; 110; 120; 130) for a battery pack (100), the heat transfer suppression sheet (10; 40; 50; 60; 70; 80; 110; 120; 130) being used in a battery pack (100) in which battery cells (20) are connected in series or in parallel and being interposed between the battery cells (20), the heat transfer suppression sheet (10; 40; 50; 60; 70; 80; 110; 120; 130) comprising:
a heat-insulating material (11; 21; 31; 51) containing at least one of inorganic particles or inorganic fibers; and
a covering material (12; 52; 72; 82) covering at least a part of the heat-insulating material (11; 21; 31; 51), wherein
a sealed gap (14) is formed between the heat-insulating material (11; 21; 31; 51) and the covering material (12; 52; 72; 82),
**characterized in that**
the covering material (12; 52; 72; 82) is configured such that a communication opening (15) that allows the gap (14) to communicate with the outside of the covering material (12; 52; 72; 82) is formed at a temperature of 60°C or more, wherein
the heat-insulating material (11; 21; 31; 51) is bonded to the covering material (12; 52; 72; 82) with an adhesive (16a, 16b, 16c) that melts at a temperature of 60°C or more and when the adhesive (16a, 16b, 16c) has melted, the communication opening (15) is formed, and/or
the covering material (12; 52; 72; 82) is formed of a polymer film that melts at a temperature of 60°C or more.

2. The heat transfer suppression sheet (10; 40; 50; 60; 70; 80; 110; 120; 130) for a battery pack (100) according to claim 1, wherein
at least one of the inorganic particles or the inorganic fibers contained in the heat-insulating material (11; 21; 31; 51) contains a material that releases moisture when heated.

3. The heat transfer suppression sheet (10; 40; 50; 60; 70; 80; 110; 120; 130) for a battery pack (100) according to claim 1 or 2, wherein
the heat-insulating material (11; 21; 31; 51) is bonded to the covering material (12; 52; 72; 82) with an adhesive (16a, 16b, 16c) that melts at a temperature of 60°C or more and when the adhesive (16a, 16b, 16c) has melted, the communication opening (15) is formed, and
the covering material (12; 52; 72; 82) is formed of a metal plate.

4. The heat transfer suppression sheet (10; 40; 50; 60; 70; 80; 110; 120; 130) for a battery pack (100) according to claim 1 or 2, wherein
the heat-insulating material (11; 21; 31; 51) is bonded to the covering material (12; 52; 72; 82) with an adhesive (16a, 16b, 16c) that melts at a temperature of 60°C or more and when the adhesive (16a, 16b, 16c) has melted, the communication opening (15) is formed, and
the covering material (12; 52; 72; 82) is formed of metal plates, and the metal plates are bonded to each other with an adhesive (16a, 16b, 16c) that melts at a temperature of 60°C or more.

5. The heat transfer suppression sheet (10; 40; 50; 60; 70; 80; 110; 120; 130) for a battery pack (100) according to claim 3 or 4, wherein
adhesives (16a, 16b, 16c) having different melting temperatures are used as the adhesive (16a, 16b, 16c) in regions such that the adhesives (16a, 16b, 16c) melt stepwise in the regions as the temperature rises.

6. The heat transfer suppression sheet (10; 40; 50; 60; 70; 80; 110; 120; 130) for a battery pack (100) according to claim 3 or 4, wherein
the adhesive (16a, 16b, 16c) is applied to regions in different application amounts such that the adhesive (16a, 16b, 16c) melts stepwise in the regions as the temperature rises.

7. A battery pack (100) in which battery cells (20) are connected in series or in parallel, wherein
the heat transfer suppression sheet (10; 40; 50; 60; 70; 80; 110; 120; 130) for a battery pack (100) according to any one of claims 1 to 6 is interposed between the battery cells (20).

## Patentansprüche

1. Wärmeübertragungsunterdrückungsfolie (10; 40; 50; 60; 70; 80; 110; 120; 130) für ein Batteriepack (100), wobei die Wärmeübertragungsunterdrückungsfolie (10; 40; 50; 60; 70; 80; 110; 120; 130) in einem Batteriepack (100) verwendet wird, in dem Batteriezellen (20) in Reihe oder parallel geschaltet sind und zwischen den Batteriezellen (20) angeordnet sind, wobei die Wärmeübertragungsunterdrückungsfolie (10; 40; 50; 60; 70; 80; 110; 120; 130) umfasst:
ein wärmeisolierendes Material (11; 21; 31; 51), das mindestens eines von anorganischen Partikeln oder anorganischen Fasern enthält; und
ein Abdeckmaterial (12; 52; 72; 82), das zumindest einen Teil des wärmeisolierenden Materials (11; 21; 31; 51) bedeckt, wobei
ein abgedichteter Spalt (14) zwischen dem wärmeisolierenden Material (11; 21; 31; 51) und dem Abdeckmaterial (12; 52; 72; 82) gebildet wird,
**dadurch gekennzeichnet, dass**
das Abdeckmaterial (12; 52; 72; 82) so konfiguriert ist, dass eine Verbindungsöffnung (15), die es dem Spalt (14) ermöglicht, mit der Außenseite des Abdeckmaterials (12; 52; 72; 82) in Verbindung zu stehen, bei einer Temperatur von 60°C oder mehr gebildet wird, wobei
das wärmeisolierende Material (11; 21; 31; 51) mit einem Klebstoff (16a, 16b, 16c), der bei einer Temperatur von 60°C oder mehr schmilzt, mit dem Abdeckmaterial (12; 52; 72; 82) verbunden ist, und wenn der Klebstoff (16a, 16b, 16c) geschmolzen ist, die Verbindungsöffnung (15) gebildet wird, und/oder
das Abdeckmaterial (12; 52; 72; 82) aus einer Polymerfolie gebildet ist, die bei einer Temperatur von 60°C oder mehr schmilzt.

2. Wärmeübertragungsunterdrückungsfolie (10; 40; 50; 60; 70; 80; 110; 120; 130) für ein Batteriepack (100) gemäß Anspruch 1, wobei
mindestens eines der anorganischen Partikel oder der anorganischen Fasern, die in dem wärmeisolierenden Material (11; 21; 31; 51) enthalten sind, ein Material enthält, das bei Erwärmung Feuchtigkeit abgibt.

3. Wärmeübertragungsunterdrückungsfolie (10; 40; 50; 60; 70; 80; 110; 120; 130) für ein Batteriepack (100) gemäß Anspruch 1 oder 2, wobei
das wärmeisolierende Material (11; 21; 31; 51) mit dem Abdeckmaterial (12; 52; 72; 82) mit einem Klebstoff (16a, 16b, 16c) verbunden ist, der bei einer Temperatur von 60°C oder mehr schmilzt, und wenn der Klebstoff (16a, 16b, 16c) geschmolzen ist, die Verbindungsöffnung (15) gebildet ist, und
das Abdeckmaterial (12; 52; 72; 82) aus einer Metallplatte gebildet ist.

4. Wärmeübertragungsunterdrückungsfolie (10; 40; 50; 60; 70; 80; 110; 120; 130) für ein Batteriepack (100) gemäß Anspruch 1 oder 2, wobei
das wärmeisolierende Material (11; 21; 31; 51) mit dem Abdeckmaterial (12; 52; 72; 82) mit einem Klebstoff (16a, 16b, 16c) verbunden ist, der bei einer Temperatur von 60°C oder mehr schmilzt, und wenn der Klebstoff (16a, 16b, 16c) geschmolzen ist, die Verbindungsöffnung (15) gebildet ist, und
das Abdeckmaterial (12; 52; 72; 82) aus Metallplatten gebildet ist und die Metallplatten mit einem Klebstoff (16a, 16b, 16c), der bei einer Temperatur von 60°C oder mehr schmilzt, miteinander verbunden sind.

5. Wärmeübertragungsunterdrückungsfolie (10; 40; 50; 60; 70; 80; 110; 120; 130) für ein Batteriepack (100) gemäß Anspruch 3 oder 4, wobei
Klebstoffe (16a, 16b, 16c) mit unterschiedlichen Schmelztemperaturen als Klebstoff (16a, 16b, 16c) in Bereichen verwendet werden, so dass die Klebstoffe (16a, 16b, 16c) in den Bereichen schrittweise schmelzen, wenn die Temperatur ansteigt.

6. Wärmeübertragungsunterdrückungsfolie (10; 40; 50; 60; 70; 80; 110; 120; 130) für ein Batteriepack (100) gemäß Anspruch 3 oder 4, wobei
der Klebstoff (16a, 16b, 16c) auf Bereiche in unterschiedlichen Auftragsmengen aufgetragen wird, so dass der Klebstoff (16a, 16b, 16c) in den Bereichen schrittweise schmilzt, wenn die Temperatur steigt.

7. Batteriepack (100), in dem Batteriezellen (20) in Reihe oder parallel geschaltet sind, wobei
die Wärmeübertragungsunterdrückungsfolie (10; 40; 50; 60; 70; 80; 110; 120; 130) für ein Batteriepack (100) gemäß mindestens einem der Ansprüche 1 bis 6 zwischen den Batteriezellen (20) angeordnet ist.

## Revendications

1. Feuille de suppression de transfert de chaleur (10 ; 40 ; 50 ; 60 ; 70 ; 80; 110 ; 120 ; 130) pour un bloc-batterie (100), la feuille de suppression de transfert de chaleur (10 ; 40 ; 50 ; 60 ; 70 ; 80 ; 110 ; 120 ; 130) étant utilisée dans un bloc-batterie (100) dans lequel des cellules de batterie (20) sont connectées en série ou en parallèle et étant interposée entre les cellules de batterie (20), la feuille de suppression de transfert de chaleur (10 ; 40 ; 50 ; 60 ; 70 ; 80 ; 110 ; 120 ; 130) comprenant ;
un matériau thermo-isolant (11 ; 21 ; 31 ; 51) contenant au moins l'une des particules inorganiques ou des fibres inorganiques ; et
un matériau de recouvrement (12 ; 52 ; 72 ; 82) recouvrant au moins une partie du matériau calorifuge (11 ; 21 ; 31 ; 51), dans laquelle
un espace étanche (14) est formé entre le matériau thermo-isolant (11 ; 21 ; 31 ; 51) et le matériau de recouvrement (12 ; 52 ; 72 ; 82),
**caractérisée en ce que**
le matériau de recouvrement (12 ; 52 ; 72 ; 82) est configuré de telle sorte qu'une ouverture de communication (15) permettant à l'espace (14) de communiquer avec l'extérieur du matériau de recouvrement (12 ; 52 ; 72 ; 82) est formée à une température de 60°C ou plus, dans laquelle
le matériau thermo-isolant (11 ; 21 ; 31 ; 51) est lié au matériau de recouvrement (12 ; 52 ; 72 ; 82) avec un adhésif (16a, 16b, 16c) qui fond à une température de 60°C ou plus et lorsque l'adhésif (16a, 16b, 16c) a fondu, l'ouverture de communication (15) est formée, et/ou
le matériau de recouvrement (12 ; 52 ; 72 ; 82) est formé d'un polymère qui fond à une température de 60°C ou plus.

2. La feuille de suppression de transfert de chaleur (10 ; 40 ; 50 ; 60 ; 70 ; 80 ; 110 ; 120 ; 130) pour un bloc-batterie (100) selon la revendication 1, dans laquelle
au moins l'une des particules inorganiques ou des fibres inorganiques contenues dans le matériau thermos-isolant (11 ; 21 ; 31 ; 51) contient un matériau qui libère de l'humidité lorsqu'il est chauffé.

3. La feuille de suppression de transfert de chaleur (10 ; 40 ; 50 ; 60 ; 70 ; 80 ; 110 ; 120 ; 130) pour un bloc-batterie (100) selon la revendication 1 ou 2, dans laquelle
le matériau thermo-isolant (11 ; 21 ; 31 ; 51) est lié au matériau de recouvrement (12 ; 52 ; 72 ; 82) avec un adhésif (16a, 16b, 16c) qui fond à une température de 60°C ou plus et lorsque l'adhésif (16a, 16b, 16c) a fondu, l'ouverture de communication (15) est formée, et
le matériau de recouvrement (12 ; 52 ; 72 ; 82) est formé d'une plaque métallique.

4. La feuille de suppression de transfert de chaleur (10 ; 40 ; 50 ; 60 ; 70 ; 80 ; 110 ; 120 ; 130) pour un bloc-batterie (100) selon la revendication 1 ou 2, dans laquelle
le matériau thermo-isolant (11 ; 21 ; 31 ; 51) est lié au matériau de recouvrement (12 ; 52 ; 72 ; 82) avec un adhésif (16a, 16b, 16c) qui fond à une température de 60°C ou plus et lorsque l'adhésif (16a, 16b, 16c) a fondu, l'ouverture de communication (15) est formée, et
le matériau de recouvrement (12 ; 52 ; 72 ; 82) est formé de plaques métalliques, et les plaques métalliques sont liées les unes aux autres avec un adhésif (16a, 16b, 16c) qui fond à une température de 60°C ou plus.

5. La feuille de suppression de transfert de chaleur (10 ; 40 ; 50 ; 60 ; 70 ; 80 ; 110 ; 120 ; 130) pour un bloc-batterie (100) selon la revendication 3 ou 4, dans laquelle
des adhésifs (16a, 16b, 16c) ayant des températures de fusion différentes sont utilisées comme adhésif (16a, 16b, 16c) dans des régions de sorte que les adhésifs (16a, 16b, 16c) fondent progressivement dans les régions lorsque la température augmente.

6. La feuille de suppression de transfert de chaleur (10 ; 40 ; 50 ; 60 ; 70 ; 80 ; 110 ; 120 ; 130) pour un bloc-batterie (100) selon la revendication 3 ou 4, dans laquelle
l'adhésif (16a, 16b, 16c) est appliqué sur des régions en différentes quantités de sorte que l'adhésif (16a, 16b, 16c) fond progressivement dans les régions lorsque la température augmente.

7. Bloc-batterie (100) dans lequel des cellules de batterie (20) sont connectées en série ou en parallèle, dans lequel
la feuille de suppression de transfert de chaleur (10 ; 40 ; 50 ; 60 ; 70 ; 80 ; 110 ; 120 ; 130) pour un bloc-batterie (100) selon l'une quelconque des revendications 1 à 6 est interposée entre les cellules de batterie (20).
